# EUROPÄISCHE PATENTSCHRIFT

(11) **EP 4 417 353 B1**
(45) Veröffentlichungstag und Bekanntmachung des Hinweises auf die Patenterteilung: **30.09.2026**
(21) Anmeldenummer: 24157374.0
(22) Anmeldetag: 13.02.2024
(51) Int. Cl.: B23K 9/095, B23K 10/02, B23K 26/044, B23K 31/12

(54) **SCHWEISSEINRICHTUNG ZUM FÜGEN EINES VERDECKTEN STOSSES**
WELDING DEVICE FOR JOINING A CONCEALED IMPACT
DISPOSITIF DE SOUDAGE POUR ASSEMBLER UN IMPACT CACHÉ

(30) Priorität: 17.02.2023 DE 102023104029
(43) Veröffentlichungstag der Anmeldung: 21.08.2024
(73) Patentinhaber: Fraunhofer-Gesellschaft zur Förderung der angewandten Forschung e.V., 80686 München (DE)
(72) Erfinder: Brunner-Schwer, Christian, 10587 Berlin (DE); Biegler, Max, 10587 Berlin (DE); Rethmeier, Michael, 10587 Berlin (DE)
(74) Vertreter: Pfenning, Meinig & Partner mbB

(56) Entgegenhaltungen:
- EP-B1- 0 873 813
- DE-A1- 102015 115 183
- US-A- 5 247 155

## Beschreibung

Die Erfindung betrifft eine Anordnung umfassend eine Schweißeinrichtung zum Fügen eines verdeckten Stoßes an einem Werkstück und das auf einer Positionierungsfläche angeordnete Werkstück mit dem verdeckten Stoß und ein Schweißverfahren zum Fügen eines verdeckten Stoßes an einem Werkstück.

Beim Fügen eines verdeckten Stoßes, wie beispielsweise eines verdeckten T-Stoßes, müssen beide Fügepartner zueinander wie auch die Fügepartner zu einer Bahn eines Fügewerkzeugs sehr genau positioniert werden. Lediglich bei einer hinreichenden Ausrichtung der beiden Fügepartner wie auch der Bahn des Fügewerkzeugs ist eine akzeptable Schweißnahtqualität erreichbar. Bei einer nicht ausreichenden Positionierungsgenauigkeit besteht die Gefahr einer mangelnden Anbindung und/oder eines Durchschweißens, wenn der Bereich des Stoßes der beiden Verbindungspartner nicht getroffen wird. Aufgrund einer Verdeckung einer der beiden Fügepartner durch den jeweils anderen ist aber eine so hohe Positionierungsgenauigkeit nur mit hohem Aufwand erreichbar, was dazu führt, dass ein Fügen von verdeckten Stoßverbindungen in der Praxis kaum angewendet wird.

Im Stand der Technik wurden zur Lösung dieses Problems verschiedene Ansätze verfolgt. Zum einen wurde eine manuelle Positionierung eines Fügewerkzeugs relativ zu einer eingespannten Werkstückskombination aus einem ersten und einem zweiten Fügepartner versucht. Da dieser Vorgang für jedes Bauteil erneut durchgeführt werden muss, findet diese Lösung keine praktische Anwendung. Daher werden diese Stoßgeometrien entweder komplett vermieden oder als Kehlnähte ausgeführt.

In DE 10 2015 115 183 A1 wird alternativ vorgeschlagen mittels optischer Kohärenz-Tomographie (OCT - Optical Coherence Tomography) eine Lage der des Stoßes und/oder der Bahn einer Fügenaht zu überwachen. Diese Technik hat aber den erheblichen Nachteil, dass die erforderliche Systemtechnik extrem teuer ist und nur für das Laserstrahlschweißen eingesetzt werden kann.

Weiterhin wurde in "Dausinger, F.; Bergmann, H.W.; Sigel, J.: Proceedings of the 6th European Conference on Laser Treatment of Materials ECLAT '96. 1. Aufl. Wiesbaden, Dinges & Frick 1996, S. 159-168." eine Machbarkeit einer Bahnführung mittels einer Photodiode untersucht. Nachteil dieser Methode ist, dass die Qualität des Dioden-Signals stark von dessen Positionierung abhängig ist. Da es sich um ein optisches System handelt, kann die Datenakquisition zudem schnell durch Verunreinigungen wie Schweißspritzer oder Schweißschmauch beeinträchtigt werden. Eine Anwendung dieser Methode ist nicht bekannt.

Zudem offenbart US 5,247,155 eine Vorrichtung und ein Verfahren zur Überwachung der Lasermaterialbearbeitung, wie z.B. Laserschweißen und Laserbohren, wobei ein Hinweis auf die Qualität der Bearbeitung durch Überwachung der durch das Plasma erzeugten beabstandeten Ladungsverteilung in der Nähe des Schmelzbades erhalten wird. Eine Metallelektrode oder Elektroden sind in der Nähe des Schmelzbades angeordnet, jedoch nicht in Kontakt mit dem Werkstück und auch nicht unbedingt in Kontakt mit dem heißen Plasma. Die (ein- oder mehrdimensionale) elektrische Ladungsverteilung wird zwischen der Elektrode oder den Elektroden und dem Werkstück oder zwischen den Elektroden selbst überwacht. Die vorhandene Laserbearbeitungsdüse (isoliert vom Werkstück) kann zu diesem Zweck verwendet werden, Mehrfachsonden, wie z. B. eine Quadrantendüse, können die Position des fokussierten Laserstrahls in Echtzeit ermitteln.

Ferner offenbart die EP 0 873 813 B1 eine Laserschneidmaschine zum Schneiden elektrisch leitender Werkstücke mit einem relativ zu dem zu bearbeitenden Werkstück von diesem beabstandet bewegbaren Laserschneidkopf zumindest mit einem elektrisch leitenden Teil mit einer Abstandsmesseinrichtung zur Bestimmung des Abstandes des Laserschneidkopfs von dem Werkstück, mit einer Widerstandsmesseinrichtung, die einerseits mit dem Laserschneidkopf bzw. dessen elektrisch leitendem Teil, insbesondere der Laserdüse des Laserschneidkopfs, und andererseits mit dem Werkstück in Verbindung steht und mittels derer die Größe des elektrischen Widerstandes des Mediums zwischen dem Laserschneidkopf und dem Werkstück bestimmbar ist sowie mit einer Einrichtung zur Steuerung der Parameter des Schneidvorgangs, mit welcher die Widerstandsmesseinrichtung über eine mit der Abstandsmesseinrichtung in Verbindung stehende Auswerteeinrichtung steuernd gekoppelt ist, wobei die Auswerteeinrichtung in Abhängigkeit von der ermittelten Größe des elektrischen Widerstandes sowie dem bestimmten Abstand des Laserschneidkopfs, insbesondere der Laserdüse, von dem Werkstück ein Steuersignal für die Einrichtung zur Steuerung der Parameter des Schneidvorgangs erzeugt, dadurch gekennzeichnet, dass die Auswerteeinrichtung ein Steuersignal für die Einrichtung zur Steuerung der Parameter des Schneidvorgangs im Sinne einer Vergrößerung des ermittelten elektrischen Widerstandes nur unter der Voraussetzung erzeugt, dass der mittels der Abstandsmesseinrichtung bestimmte Abstand von Null verschieden ist.

Die Aufgabe der vorliegenden Offenbarung ist es einen gegenüber dem Stand der Technik verbesserten Ansatz für das Fügen mittels Schweißens eines verdeckten Stoßes bereitzustellen.

Diese Aufgabe wird gelöst durch die in Anspruch 1 beschriebene Anordnung und durch das in Anspruch 8 beschriebene Schweißverfahren.

Die Schweißeinrichtung zum Fügen eines verdeckten Stoßes an einem Werkstück umfasst die folgenden Elemente: eine Positionierungsfläche zum Positionieren des Werkstücks, ein Schweißwerkzeug, eine Sensoranordnung und eine Steuereinrichtung. Das Schweißwerkzeug ist ausgebildet, zum Fügen mittels eines Werkzeugkopfes eine Oberfläche des Werkstücks, die den verdeckten Stoß umfasst, zu erhitzen, wobei der Werkzeugkopf relativ zur Positionierungsfläche verfahrbar angeordnet ist. Die Sensoranordnung ist ausgebildet, eine Ausprägung eines durch das Schweißwerkzeug in einer Wechselwirkungszone zwischen Werkzeugkopf und Werkstück erzeugbaren Plasmas durch Ermitteln einer elektrischen Eigenschaft des Plasmas zu bestimmen und ein Plasmainformationssignal in Abhängigkeit von der ermittelten Ausprägung des Plasmas bereitzustellen. Die Steuereinheit dient dem Verfahren des Werkzeugkopfes, empfängt das Plasmainformationssignal und ist ausgebildet, den Werkzeugkopf in Abhängigkeit des Plasmainformationssignals entlang des verdeckten Stoßes zu verfahren.

Die beschriebene Schweißeinrichtung ist typischerweise vorteilhaft zum Fügen eines verdeckten Stoßes an einem Werkstück mittels Schweißens.

Die beschriebene Schweißeinrichtung löst ein fügetechnisches Problem, insbesondere beim Schweißen mittels mechanischer Handhabungssysteme (z.B. mit Linearachsen oder Robotern), beim Fügen eines verdeckten Stoßes an einem Werkstück. Wie oben bereits beschrieben ist beim Fügen eines verdeckten Stoßes eine Position mindestens einer der beiden Fügepartner nicht bekannt oder nur in etwa bekannt. Gerade wenn die Blechdicken der Fügepartner nur wenige Millimeter (ca. 0,5 mm - 5 mm) betragen, ist die Kenntnis über die exakte Positionierung der Fügepartner für eine erfolgreiche Definition der Schweißbahn und damit erfolgreiche Schweißung wichtig. Eine erfolgreiche Schweißung ist dann gegeben, wenn die Schweißverbindung über den gesamten Querschnitt vollständig und fehlerfrei vorhanden ist (auch Vollanschluss genannt). Die beschriebene Schweißeinrichtung ist im Allgemeinen dann vorteilhaft, wenn die exakte Definition der Schweißbahn zum Erreichen eines Vollanschlusses aufgrund der nicht exakt bekannten Position mind. eines Fügepartners nicht oder nur mit hohem Aufwand möglich ist. Die beschriebene Schweißeinrichtung ermöglicht, dass bereits eine grobe Definition der Schweißbahn für eine erfolgreiche Schweißung ausreichend ist. Dazu wird eine Ausbildung eines Plasmas, das beim Schweißen aufgrund einer Ionisierung eines Metalldampfes, der ein Resultat einer Interaktion zwischen Schweißwerkzeug und Werkstück ist, mittels einer Sensoranordnung überwacht wird. Im Gegensatz zu einer optischen Überwachung des Plasmas, erfolgt die Überwachung hier anhand elektrischer Eigenschaften des Plasmas. Die Überwachung der elektrischer Eigenschaften des Plasmas ermöglicht üblicherweise eine genaue Bestimmung, ob sich der Werkzeugkopf des Schweißwerkzeugs über dem verdeckten Stoß befindet oder nicht, so dass eine Schweißbahn ggf. durch die Schweißeinrichtung korrigiert werden kann, sodass ein Vollanschluss erreicht werden kann. Dies hat den Vorteil, dass eine genaue und zeitaufwendige Positionierung von Schweißwerkzeug und Fügepartner im Allgemeinen entfällt. Zudem ist die beschriebene Schweißeinrichtung sehr kostengünstig. Diese Eigenschaften machen die Schweißeinrichtung konkurrenzfähig zu High-Tech-Lösungen wie der oben beschriebenen OCT-Lösung, die zurzeit Investitionen im unteren sechsstelligen Bereich erfordert.

Im Folgenden werden weitere Ausführungsformen der Anordnung beschrieben.

Zunächst sollen an dieser Stelle jedoch noch auf ein paar Begrifflichkeiten dieser Offenbarung eingegangen werden. Mit dem Begriff Werkzeugkopf wird ein Bestandteil des Schweißwerkzeugs bezeichnet, mittels dessen Hilfe unmittelbar eine Bearbeitung des Werkstücks erfolgt. Dies kann im Falle eines Laserschweißwerkzeugs eine Austrittsöffnung für einen Laserstrahl sein oder auch eine Spiegelanordnung, die ein Umlenken des Laserstrahls auf das Werkstück ermöglicht. Im Falle eines Lichtbogenschweißwerkzeugs kann dies auch die Elektrode sein. Teil des Werkzeugkopfes können auch Düsen zum Einleiten von Gas sein, wie später noch genauer beschrieben wird. Der Begriff verfahrbar ist im Rahmen dieser Anmeldung als translatorisch bewegbar zu verstehen. Dies kann entlang von Achsen mittels beispielsweise Rollen oder Rädern geschehen. Das Verfahren kann jedoch auch mittels einer Roboterbewegung erfolgen, wobei keine Rollen oder Räder involviert sind.

Im Folgenden wird zunächst auf Ausführungsformen eingegangen, die verschieden ausgestaltete Sensoranordnungen zur Ermittlung der Ausprägung des Plasmas umfassen.

In verschiedenen Ausführungsformen erfolgt die Bestimmung der Ausprägung des Plasmas insbesondere durch Ermittlung eines Widerstandswertes bzw. Leitfähigkeitswertes des Plasmas und/oder einer elektrischen Ladung des Plasmas.

In einer dieser Ausführungsformen weist beispielsweise die Sensoranordnung einen Plasmawiderstandssensor auf, der ausgebildet ist, mittels eines elektrischen Schaltkreises mit einer Plasmaelektrode einen elektrischen Widerstand des Plasmas zu ermitteln. Eine Messung des elektrischen Widerstands ist typischerweise vorteilhaft zur Ermittlung der Ausprägung des Plasmas. Diese Form der Ermittlung der Ausprägung des Plasmas ist besonders vorteilhaft, wenn das Plasma gering ausgeprägt ist bspw. durch eine Verwendung eines weniger leistungsstarken Schweißwerkzeugs.

In einer Variante dieser Ausführungsform ist die Plasmaelektrode dabei mit dem Werkzeugkopf verfahrbar ist. In einer anderen Variante ist zur Ermittlung des Plasmawiderstands vom elektrischen Schaltkreis zusätzlich oder alternativ eine Werkstückelektrode umfasst, die mit dem Werkstück elektrisch verbindbar ist. In anderen Varianten umfasst der elektrische Schaltkreis zusätzlich oder alternativ eine Spannungsquelle mit einem ersten Kontakt und einem zweiten Kontakt, wobei der erste Kontakt mit der Plasmaelektrode verbunden ist und der zweite Kontakt über einen elektrischen Widerstand mit der Werkstückelektrode. Zudem umfasst in dieser Variante der elektrische Schaltkreis eine Spannungsmesseinrichtung, die ausgebildet ist eine über den elektrischen Widerstand abfallende Spannung zu ermitteln. Anders ausgedrückt erfolgt die Ermittlung des elektrischen Widerstands des Plasmas mittels eines Spannungsteilers, der eine Reihenschaltung aus einem festen elektrischen Widerstand und den durch das Plasma gegebenen variablen Plasmawiderstand aufweist.

In einer anderen Ausführungsform der Anordnung weist die Sensoranordnung zusätzlich oder alternativ einen Plasmaladungssensor auf, der ausgebildet ist mittels eines elektrischen Schaltkreises mit einer Plasmaelektrode eine elektrische Ladung des Plasmas zu ermitteln. Auch eine Bestimmung der elektrischen Ladung des Plasmas hat sich als typischerweise vorteilhaft für die Ermittlung der Ausprägung eines Plasmas gezeigt. In Varianten dieser Ausführungsform ist die Plasmaelektrode mit dem Werkzeugkopf verfahrbar.

Im Folgenden werden nun weitere Ausführungsformen beschrieben, die eine der zuvor beschriebenen Sensoranordnungen zum Ermitteln des elektrischen Widerstands des Plasmas oder zum Ermitteln der Plasmaladung aufweisen.

In einer dieser Ausführungsformen umfasst die Sensoranordnung zusätzlich oder alternativ eine Mehrzahl von Plasmaelektrode und ist ausgebildet eine Ausprägung des Plasmas mittels jeder der Plasmaelektroden zu ermitteln. In Varianten sind die Plasmaelektroden um einen Strahlungspfad des Schweißwerkzeugs angeordnet, insbesondere in einer Ebene auf einem Kreis um den Strahlungspfad, insbesondere gleichmäßig verteilt um den Strahlungspfad angeordnet. In einer anderen Variante sind die Plasmaelektroden zusätzlich oder alternativ ausgebildet, um die Ausprägung des Plasmas punktartig zu ermitteln.

Der Begriff Strahlungspfad beschreibt im Rahmen dieser Offenbarung eine Wegstrecke die durch das Schweißwerkzeug erzeugte Strahlung nimmt. Dies kann beispielsweise ein Laserstrahl eines Laserschweißwerkzeugs oder ein Lichtbogen eines Lichtbogenschweißwerkzeugs sein.

In einer anderen Ausführungsform ist zusätzlich oder alternativ der Werkzeugkopf über der Positionierungsfläche entlang von einer oder mehreren Achsen verfahrbar und sind die eine oder mehreren Plasmaelektroden entlang der einen oder der mehreren Achsen angeordnet. In einer Variante dieser Ausführungsform ist die Plasmaelektrode entlang einer Achse in Vorschubrichtung angeordnet. In einer anderen Variante ist zusätzlich oder alternativ der Werkzeugkopf entlang von zwei Achsen verfahrbar und entlang jeder Achse ist vor und hinter dem Strahlungspfad jeweils eine Plasmaelektrode angeordnet.

In einer weiteren Ausführungsform ist zusätzlich oder alternativ zum Zuführen eines Gases eine Schweißdüse vom Werkzeugkopf umfasst. Ferner ist die eine oder sind die mehreren Plasmaelektroden entlang des Strahlungspfads auf einer Höhe mit der Schweißdüse angeordnet oder entlang des Strahlungspfads zwischen der Schweißdüse und der Positionierungsfläche. In einer Variante dieser Ausführungsform ist die Schweißdüse in einem Strahlungspfad des Schweißwerkzeugs zwischen Werkzeugkopf und Werkstück angeordnet und weist eine Durchführung auf, durch die der Strahlungspfad verläuft.

In einer noch anderen Ausführungsform ist die eine oder sind die mehreren Plasmaelektroden zusätzlich oder alternativ entlang eines Strahlungspfades des Schweißwerkzeugs angeordnet. In einer Variante dieser Ausführungsform ist ein Abstand von der Plasmaelektrode zum Strahlungspfad nicht größer als 4mm. In einer anderen Variante ist ein Abstand zum Strahlungspfad zusätzlich oder alternativ kleiner oder gleich 3 mm.

In einer anderen Ausführungsform umfasst das Schweißwerkzeug zusätzlich oder alternativ ein Laserschweißwerkzeug und/oder ein Lichtbogenschweißwerkzeug. Als Strahlungspfad ist dabei je nach Art des Schweißwerkzeugs der Strahlengang eines Laserstrahls beim Laserschweißen oder der Pfad eines Schweißbogens beim Schweißbogenschweißen zu verstehen.

In einer weiteren Ausführungsform umfasst die Schweißeinrichtung zusätzlich oder alternativ einen verfahrbaren Werkzeugkopf und/oder verfahrbare Positionierungsfläche. Beide Optionen sind gleichwertig. Entscheidend ist eine relative Bewegung zueinander.

Im Folgenden wird nun auf das Schweißverfahren genauer eingegangen.

Das Schweißverfahren zum Fügen eines verdeckten Stoßes an einem Werkstück umfasst dabei die folgenden Schritte:
- Erhitzen einer Oberfläche des Werkstücks, die den verdeckten Stoß umfasst, zum Fügen mittels eines Schweißwerkzeugs mit einem Werkzeugkopf,
- Bestimmen einer Ausprägung eines aufgrund einer Wechselwirkung zwischen Schweißwerkzeug und Werkstück erzeugten Plasmas durch Ermitteln einer elektrischen Eigenschaft des Plasmas, und
- Verfahren des Werkzeugkopfes in Abhängigkeit in Abhängigkeit von der bestimmten Ausprägung des Plasmas entlang des verdeckten Stoßes.

Das Schweißverfahren weist die Vorteile auf, die auch die Schweißvorrichtung aufweist. Im Folgenden werden nun verschiedene Ausführungsformen dieses Verfahrens beschrieben.

In einer Ausführungsform wird der Werkzeugkopf in Vorschubrichtung entlang einer Vorschubachse verfahren und, in Abhängigkeit von der ermittelten Ausprägung des Plasmas, in Korrekturrichtung entlang einer Korrekturachse senkrecht zur Vorschubachse. In einer Variante dieser Ausführungsform wird dabei in Vorschubrichtung eine Vorschubgeschwindigkeit, insbesondere eine konstante Vorschubgeschwindigkeit, gewählt, mit der der Werkzeugkopf entlang der Vorschubrichtung verfahren wird. In Abhängigkeit von der ermittelten Ausprägung des Plasmas wird dann zusätzlich zur Vorschubrichtung der Werkzeugkopf auch in Korrekturrichtung verfahren. In anderen Varianten dieser Ausführungsform wird der Werkzeugkopf entweder in Vorschubrichtung oder in Korrekturrichtung verfahren.

In einer anderen Ausführungsform erfolgt das Verfahren des Werkzeugkopfes entlang der Korrekturrichtung, wenn eine definierte Änderung der Ausprägung des Plasmas ermittelt wird. In Varianten umfasst die definierte Änderung eine Reduzierung der Ausprägung des Plasmas. Eine Reduzierung der Ausprägung weist auf ein Verlassen der durch den Werkzeugkopf erzeugten Schweißnaht aus dem Gebiet des verdeckten Stoßes hin. In Varianten dieser Ausführungsform erfolgt eine Ermittlung der Ausprägung des Plasmas über ein definiertes Zeitintervall. Eine Reduzierung der Ausprägung entspricht in diesem Fall einer Reduzierung einer über das Intervall gemittelten Ausprägung. Insbesondere handelt es sich bei dem Mittelwert um einen "Running Average" oder fortlaufenden Mittelwert.

In einer noch weiteren Ausführungsform wird die Ausprägung des Plasmas an zwei Punkten beidseitig um einen Strahlungspfad des Schweißwerkzeugs entlang der Korrekturachse ermittelt und das Verfahren des Werkzeugkopfes in Abhängigkeit der ermittelten Ausprägung des Plasmas an diesen beiden Punkten erfolgt. Dies ist besonders vorteilhaft, um entscheiden zu können, in welche Richtung eine Korrektur entlang der Korrekturachse erfolgen soll.

Alternativ zum Verfahren des Werkzeugkopfes entlang einer festen Vorschubrichtung kann ein Verfahren des Werkzeuges auch ohne die Vorgabe dieser Vorschubrichtung nur mittels der Information über die Ausprägung des Plasmas erfolgen. In einer Ausführungsform des Schweißverfahrens wird dazu eine Verfahrrichtung des Werkzeugkopfes anhand der Ausprägung des Plasmas ermittelt wird. In einer Variante dieser Ausführungsform erfolgt die Ermittlung der Ausprägung des Plasmas an vier Punkten, die gleichmäßig um einen Strahlungspfad des Schweißwerkzeugs angeordnet sind.

In einer anderen Ausführungsform wird zusätzlich oder alternativ die Ausprägung des Plasmas an einem Punkt, der entlang einer Vorschubachse in Vorschubrichtung vor einem Strahlungspfad des Schweißwerkzeugs liegt, ermittelt. Eine Information über die Ausprägung des Plasmas an diesem Punkt lässt besonders zuverlässig Rückschlüsse auf ein Verlassen des Bereiches des verdeckten Stoßes zu.

In einer anderen Ausführungsform wird zusätzlich oder alternativ eine Verfahrgeschwindigkeit zum Verfahren des Werkzeugkopfes in Vorschubrichtung in Abhängigkeit eines Leistungsparameters des Schweißwerkzeugs gewählt, so dass bei der gewählten Verfahrgeschwindigkeit keine Löcher im Werkstück entstehen. Die Verfahrgeschwindigkeit entspricht in Varianten dieser Ausführungsform einer Vorschubgeschwindigkeit in Vorschubrichtung. In anderen Varianten entspricht die Verfahrgeschwindigkeit alternativ oder zusätzlich einer Korrekturgeschwindigkeit in Korrekturrichtung. In noch anderen Varianten entspricht die Verfahrgeschwindigkeit einer Gesamtgeschwindigkeit aus Vorschubgeschwindigkeit und Verfahrgeschwindigkeit.

In einer anderen Ausführungsform des Schweißverfahrens wird zusätzlich oder alternativ der Werkzeugkopf initial über dem verdeckten Stoß platziert.

Im Weiteren werden nun die beschriebenen Ausführungsformen der Einrichtung und des Verfahrens anhand der in den Figuren gezeigten Ausführungsbeispiele weiter erläutert. Dazu wird zunächst ein Überblick über die Figuren gegeben.
- Fig. 1: zeigt eine Schweißeinrichtung zum Fügen eines verdeckten Stoßes an einem Werkstück gemäß dieser Offenbarung;
- Fig. 2: zeigt eine mit der in Fig. 1 gezeigten Schweißeinrichtung verwendbare Sensoranordnung;
- Fig. 3: zeigt die Schweißeinrichtung aus Fig. 1 während eines Schweißprozesses;
- Fig. 4: zeigt eine Schweißeinrichtung mit zwei separaten Elektroden;
- Fig. 5: zeigt eine Anordnung von vier separaten Elektroden, wie sie in einer der Schweißeinrichtungen gemäß dieser Offenbarung verwendet werden können;
- Fig. 6: zeigt ein Schweißverfahren gemäß dieser Offenbarung;
- Fig. 7: zeigt ein Ausführungsbeispiel des Schweißverfahrens aus Fig. 6, bei dem der Werkzeugkopf entlang einer festen Vorschubrichtung verschoben wird; und
- Fig.8: zeigt ein Ausführungsbeispiel des Schweißverfahrens aus Fig. 6, bei dem eine Verfahrrichtung des Werkzeugkopfs anhand einer an mehreren Punkten ermittelten Ausprägung des Plasmas erfolgt.

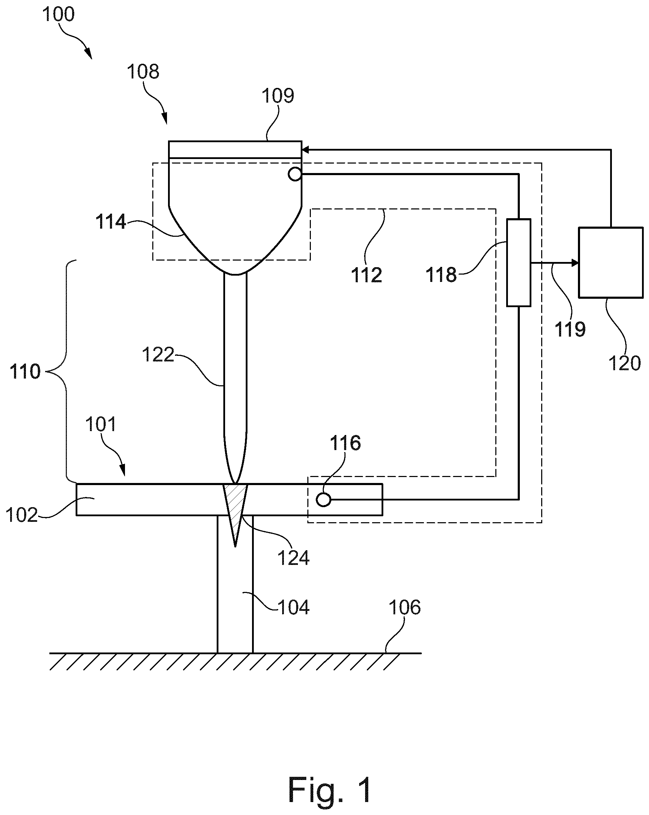

Im Folgenden werden die in den Figuren gezeigten Ausführungsbeispiele im Detail beschrieben. Zunächst wird dabei auf ein erstes Ausführungsbeispiel einer Schweißeinrichtung mit Bezug auf Fig. 1 eingegangen.

Fig. 1 zeigt eine Schweißeinrichtung 100 zum Fügen eines verdeckten Stoßes an einem Werkstück 101 gemäß dieser Offenbarung.

Die Schweißeinrichtung 100 umfasst dabei eine Positionierungsfläche 106 zum Positionieren eines Werkstücks, wie in diesem Beispiel des Werkstücks 101. Weiterhin umfasst die Schweißeinrichtung 100 ein Schweißwerkzeug 108 von dem in Fig. 1 nur ein Werkzeugkopf 109 abgebildet ist, das ausgebildet ist, zum Fügen mittels des Werkzeugkopfes 109 eine Oberfläche des Werkstücks 101, die den verdeckten Stoß umfasst, zu erhitzen, wobei der Werkzeugkopf 109 relativ zur Positionierungsfläche 106 verfahrbar angeordnet ist. Ferner umfasst die Schweißeinrichtung 100 eine Sensoranordnung 112, die ausgebildet ist, eine Ausprägung eines durch das Schweißwerkzeug 108 in einer Wechselwirkungszone 110 zwischen Werkzeugkopf 109 und Werkstück 101 erzeugbaren Plasmas durch Ermitteln einer elektrischen Eigenschaft des Plasmas zu bestimmen und ein Plasmainformationssignal 119 in Abhängigkeit von der ermittelten Ausprägung des Plasmas bereitzustellen. Zudem umfasst die Schweißeinrichtung eine Steuereinheit 120 zum Verfahren des Werkzeugkopfes 109, die das Plasmainformationssignal 119 empfängt und ausgebildet ist, den Werkzeugkopf 109 in Abhängigkeit des Plasmainformationssignals 119 entlang des verdeckten Stoßes zu verfahren.

In dem in Fig. 1 gezeigten Ausführungsbeispiel der Schweißeinrichtung 100 ist zu Anschauungszwecken ein konkretes Beispiel 101 für ein Werkstück gezeigt. Dieses Werkstück 101 umfasst einen T-Stoß, der aus einem oberen Fügepartner 102 und einem unteren Fügepartner 104 gebildet wird, wobei der obere Fügepartner 102 aus der Perspektive des Werkzeugkopfes 109 den unteren Fügepartner 104 verdeckt. Das gezeigte Werkstück 101 ist hier aber nur beispielhaft zu verstehen. Es könnte sich bei dem Werkstück auch um ein beliebig anderes Werkstück handeln.

Weiterhin stellt in der Fig. 1 gezeigten Schweißeinrichtung 100 der Werkzeugkopf 109 den Werkzeugkopf eines Laserschweißwerkzeugs dar. Mittels des Werkzeugkopfes 109 wird ein Laserstrahl 122 entlang eines Strahlungspfades emittiert. Wie später noch genauer beschrieben wird, ist dieser Werkzeugkopf verfahrbar über der Positionierungsfläche 106 angeordnet und erzeugt in dem Werkstück 101 im Bereich des T-Stoßes ein Schmelzbad, aus dem Metalldampf aufsteigt, der innerhalb der Wechselwirkungszone 110 aufgrund weiterer Interaktion mit dem Laserstrahl 122 in ein Plasma umgewandelt wird. Aus dem Schmelzbad entsteht dann eine Schweißnaht 124. Das Laserschweißwerkzeug ist aber nicht zwingender Bestandteil der Schweißeinrichtung 100. Es könnte bspw. auch ein Lichtbogenschweißwerkzeug verwendet werden. Der Laserstrahl 122 wäre in diesem Fall ein durch den Lichtbogen ausgebildeter Strahlungspfad.

Bei der gezeigten Ausführungsform 100 der Schweißeinrichtung umfasst der Werkzeugkopf 109 zum Zuführen eines Gases eine Schweißdüse, die in einem Inneren der Werkzeugkopfes angeordnet ist und in Fig. 1 nicht gezeigt ist.

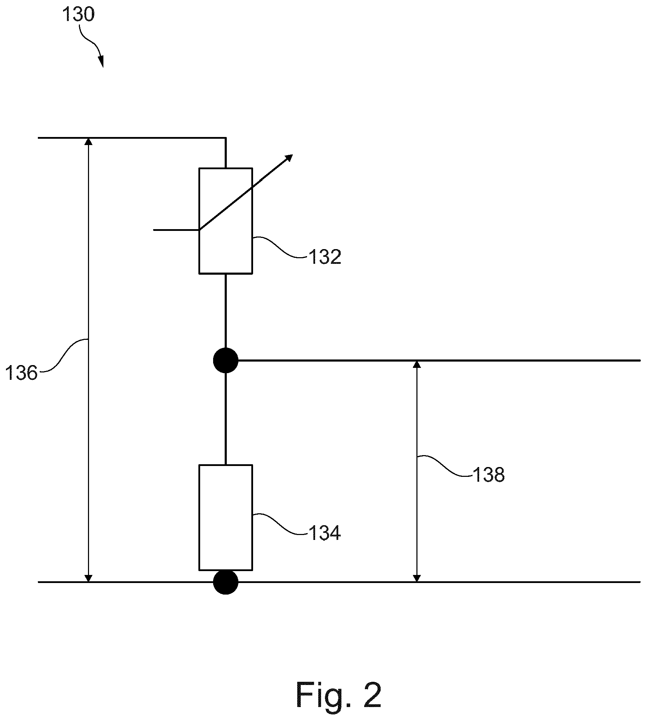

Die in Fig. 1 gezeigte Sensoranordnung 112 umfasst in dem konkreten Ausführungsbeispiel der Schweißeinrichtung eine Plasmaelektrode 114, die durch eine elektrisch leitende Ummantelung des Werkzeugkopfes 109 gebildet wird und eine Werkstückelektrode 116, die elektrisch leitend mit dem Werkstück 101 verbunden ist. Beide Elektroden sind elektrisch leitend mit einer Sensoreinheit 118 verbunden, die ausgebildet ist, mittels der durch die Elektroden ermittelten elektrischen Eigenschaften des Plasmas das Plasmainformationssignal 119 bereitzustellen. Zur Ermittlung der Ausprägung des Plasmas kann beispielsweise eine Sensoreinheit verwendet werden, die einen Plasmawiderstandssensor aufweist, der ausgebildet ist, mittels eines elektrischen Schaltkreises, der u.a. die Plasmaelektrode aufweist, einen elektrischen Widerstand des Plasmas zu ermitteln. Alternativ kann aber auch eine Sensoreinheit verwendet werden, die einen Plasmaladungssensor aufweist, der ausgebildet ist mittels eines elektrischen Schaltkreises, der die u.a. die Plasmaelektrode aufweist, eine elektrische Ladung des Plasmas zu ermitteln. Im Folgenden wird mit Bezug auf Fig. 2 ein elektrischer Schaltkreis beschrieben, der verwendet werden kann, um einen elektrischen Widerstand des Plasmas zu ermitteln.

Fig. 2 zeigt eine mit der in Fig. 1 gezeigten Schweißeinrichtung verwendbare Sensoranordnung.

Die Sensoranordnung umfasst einen Schaltkreis 130, der ausgebildet ist, einen elektrischen Widerstand des Plasmas zu ermitteln. Der elektrische Widerstand des Plasmas ist in der Schaltung als veränderlicher Widerstand 132 dargestellt. Der Widerstandswert wird mithilfe des Schaltkreises 130 in Form einer Reihenschaltung aus einem festen Widerstand 134 und dem veränderlichen Widerstand 132 ermittelt. Der Widerstand des Plasmas wird gemäß Fig. 1 mit der Plasmaelektrode 114 und der Werkstückselektrode 116 abgegriffen. Über beide Widerstände wird eine Gesamtspannung 136 angelegt. Anhand einer Messung der über den festen Widerstand abfallenden Spannung 138 kann ein Rückschluss auf den Wert des Plasmawiderstands geschlossen werden. Fällt über dem festen Widerstand 134 ein hoher Prozentsatz der Gesamtspannung 136 ab, kann von einem kleinen Plasmawiderstand 132 und damit von einer großen Ausprägung des Plasmas ausgegangen werden. Fällt hingegeben über dem festen Widerstand 134 nur ein kleiner Anteil der Gesamtspannung 136 ab, so kann von einem großen Plasmawiderstand 132 und damit von einer geringen Ausprägung des Plasmas ausgegangen werden. Diese Art der elektrischen Schaltung ist auch als Spannungsteiler bekannt.

In diesem Beispiel hat der feste Widerstand eine Größe von 470 kΩ und die Gesamtspannung einen Wert von 3,3 V. Für beide Größen können jedoch auch andere Werte verwendet werden.

Die Sensoranordnung 112 ist ausgebildet, die Spannungssignale zu erfassen und so zu verändern, dass diese als Eingangssignal einer Regelung in der Steuereinheit 120 eingesetzt werden können. In der Regel wird dazu eine Glättung des Signals vorgenommen, z.B. durch die Berechnung eines gleitenden Mittelwertes. Die Regelung in der Steuereinheit 120 kann auf verschiedene Arten gestaltet werden, z. B. über singuläre Grenzwert-Regeln, Closed-Loop, PID-Regler oder einer Kombination davon. Auch können neuronale Netzen oder Softwareansätzen, die im Allgemeinen mit dem Begriff "Künstliche Intelligenz" beschrieben werden, verwendet werden. Die Steuereinheit 120 ist ausgebildet, nach Durchlaufen des Algorithmus, wenn nötig, die nötige Positionsänderung an den Werkzeugkopf 109 weiterzugeben, so dass dieser die Positionsänderung während des Schweißprozesses vornehmen kann.

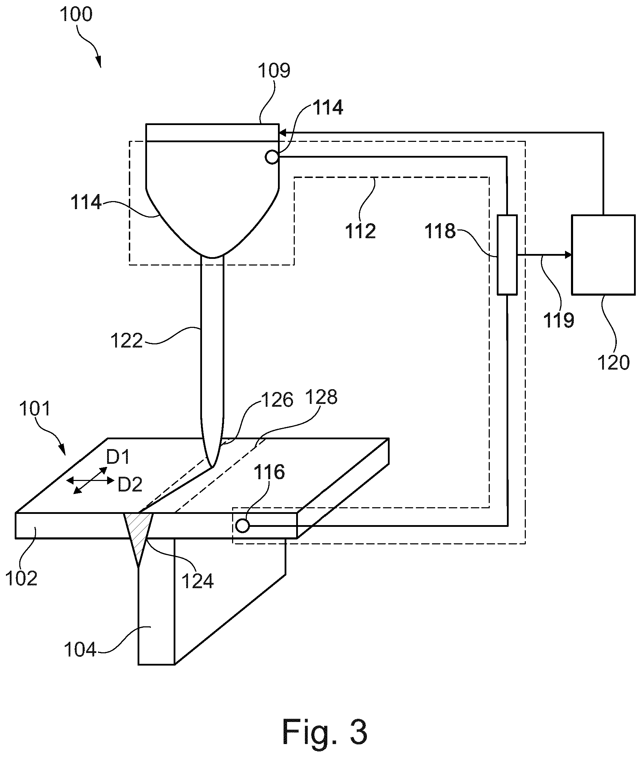

Mithilfe der in Fig. 1 gezeigten Schweißeinrichtung kann eine Führung des Werkzeugkopfes entlang des verdeckten Stoßes, der durch den oberen Fügepartner 102 und einem unteren Fügepartner 104 gebildet wird, erfolgen. Dies wird im Detail im Folgenden mit Bezug auf Fig. 3 erläutert.

Fig. 3 zeigt die Schweißeinrichtung 100 aus Fig. 1 während eines Schweißprozesses. Fig. 3 zeigt dabei die Schweißeinrichtung 100 aus Fig. 1 in einer anderen Perspektive mittels der, die durch eine Bewegung des Werzeugkopfes 109 erzeugte Schweißnaht 124 entlang des Stoßes sichtbar ist. Zur Vereinfachung ist in Fig. 3 die Positionierungsfläche 106 nicht dargestellt. Identische Bestandteile der bereits aus Fig. 1 bekannten Schweißeinrichtung 100 und des aus Fig. 1 bekannten Werkstücks 101 wurden in Fig. 3 mit identischen Bezugszeichen versehen. Für eine kurze und bündige Beschreibung werden diese Bestandteile im Folgenden nicht erläutert. Vielmehr konzentriert sich die Beschreibung von Fig. 3 auf die in Fig. 3 erstmalig dargestellten Sachverhalte. Dies gilt analog auch für die weiteren Figuren dieser Offenbarung.

Wie oben bereits beschrieben, ist der Werkzeugkopf 109 verfahrbar angeordnet und kann relativ zur Positionierungsfläche 106 bewegt werden. Insbesondere ist der Werkzeugkopf 109 über dem Werkstück 101 entlang einer Richtung D1 und entlang einer Richtung D2 verfahrbar.

Gestrichelte Linien 126 und 128 geben den Bereich auf einer Oberfläche des oberen Fügepartners 102 an, in dem die Schweißnaht für eine hohe Schweißnahtqualität verlaufen sollte. Wie in Fig. 3 erkennbar ist, wurde die Schweißnaht während des Schweißprozesses sehr nahe entlang der gestrichelten Linie 126 geführt. Beim Verlassen des Bereiches zwischen den gestrichelten Linien 126 und 128 nimmt die Materialmenge, die zur Herstellung der Schweißnaht zur Verfügung steht ab, da nur noch Material vom oberen Fügepartner 102 aufgeschmolzen wird und kein Material vom unteren Fügepartner 104. Dies führt dazu, dass sich auch die Ausprägung des durch das Schweißwerkzeug 108 erzeugten Plasmas reduziert. Die Sensoranordnung 112 der Schweißeinrichtung ist ausgebildet diese Reduzierung zu detektiert. Ferner ist die Steuereinrichtung 120 ausgebildet, anhand der detektierten Ausprägung des Plasmas ein Verhältnis aus einem Vorschub entlang der Richtung D1 und D2 so anzupassen, dass die Schweißnaht im Bereich zwischen den gestrichelten Linien 126 und 128 verbleibt.

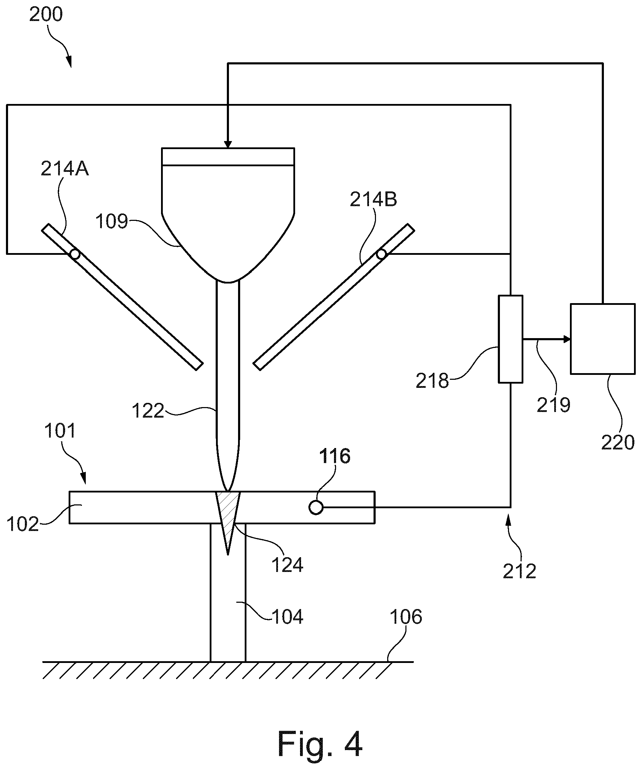

Die Plasmaelektrode 114 wird bei der Schweißeinrichtung 100 durch den Werkzeugkopf 109 gebildet. Dies ist jedoch nicht die einzige Möglichkeit der Anordnung der Plasmaelektrode. Im Folgenden werden mit Bezug auf die Fign. 4-6 weiteren Schweißeinrichtungen beschrieben, die eine andere Anordnung der Plasmaelektrode aufweisen.

Fig. 4 zeigt eine Schweißeinrichtung 200 mit zwei separaten Plasmaelektroden 214A und 214B.

Die separaten Plasmaelektroden 214A und 214B einer Sensoranordnung 212 sind über einen Kontakt mit einer Sensoreinheit 218 elektrisch leitend verbunden. Die separaten Plasmaelektroden 214A und 214B haben einen länglichen Elektrodenkörper dessen eines Ende über einen Kontakt mit der Sensoreinheit 218 elektrisch leitend verbunden ist. Ein entgegengesetztes Ende der Plasmaelektroden 214A und 214B ist von zwei Seiten entlang des Laserstrahls vertikal unterhalb des Werkzeugkopfes 109 angeordnet. Dies hat den Vorteil, dass mittels des länglichen Elektrodenkörpers die Ausprägung des Plasmas punktartig am zum Laserstrahl 122 hin zeigenden Ende ermittelt werden kann. Zudem ist durch die Verwendung einer separaten Plasmaelektrode eine Anordnung der Plasmaelektrode näher an einer Oberfläche des Werkstücks 101, bei der die Schweißnaht ausgeführt wird möglich, ohne dass der gesamte Werkzeugkopf 109 näher an das Werkstück 101 gebracht werden muss. Die Verwendung von zwei Plasmaelektroden hat zudem den Vorteil, dass eine Ausprägung des Plasma an zwei Punkten gleichzeitig bestimmt werden kann.

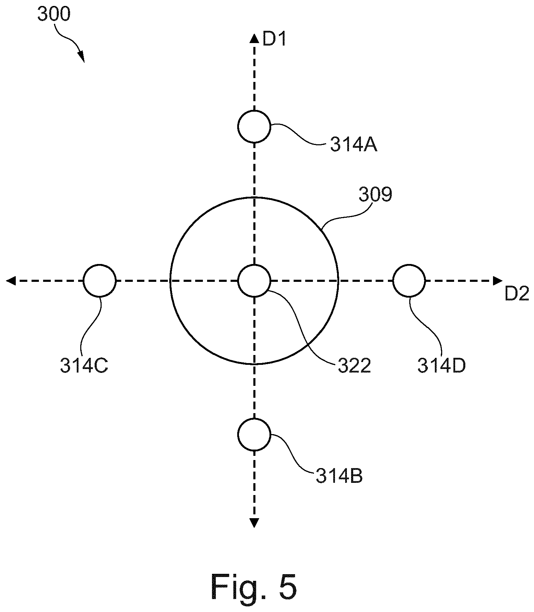

Grundsätzlich ist es aber möglich auch mehr als zwei Plasmaelektroden zu verwenden. Eine mögliche Anordnung wird im Folgenden mit Bezug auf Fig. 5 beschrieben.

Fig. 5 zeigt eine Anordnung 300 von vier separaten Elektroden, wie sie in einer der Schweißeinrichtungen gemäß dieser Offenbarung verwendet werden können.

Die Anordnung 300 ist in Fig. 5 in Form einer Draufsicht entlang des Stahlungspfads gezeigt. Gezeigt sind ein Werkzeugkopf 309 eines Schweißwerkzeuges sowie ein Stahlungspfad 322, der durch den Werkzeugkopf 309 verläuft. Weiterhin sind zwei Verfahrachsen D1 und D2 des Werkzeugkopfes 309 eingezeichnet. Insgesamt sind vier Plasmaelektroden 314A-D um den Strahlungspfad 322 herum angeordnet. Die Plasmaelektroden 314A-D sind dabei entlang der beiden Verfahrachsen jeweils vor und hinter dem Werkzeugkopf 309 und mit dem Werkzeugkopf 309 verfahrbar angeordnet.

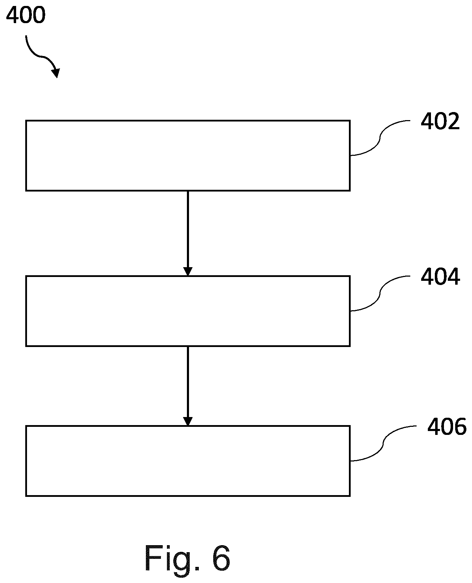

Neben der Schweißeinrichtung können Vorteile der beschriebenen Schweißeinrichtung auch mit dem Schweißverfahren gemäß dieser Offenbarung verwirklicht werden. Im Folgenden werden Ausführungsbeispiele des Schweißverfahrens mit Bezug auf die Fign. 6-8 beschrieben.

Fig. 6 zeigt ein Schweißverfahren 400 gemäß dieser Offenbarung. Das Schweißverfahren 400 umfasst dabei die folgenden Schritte.

In einem Schritt 402 wird eine Oberfläche des Werkstücks, die den verdeckten Stoß umfasst, zum Fügen mittels eines Schweißwerkzeugs mit einem Werkzeugkopf erhitzt. In einem zweiten Schritt 404 wird eine Ausprägung eines aufgrund einer Wechselwirkung zwischen Schweißwerkzeug und Werkstück erzeugten Plasmas durch Ermitteln einer elektrischen Eigenschaft des Plasmas bestimmt. In einem dritten Schritt 406 wird der Werkzeugkopf in Abhängigkeit der ermittelten Ausprägung entlang des verdeckten Stoßes verfahren.

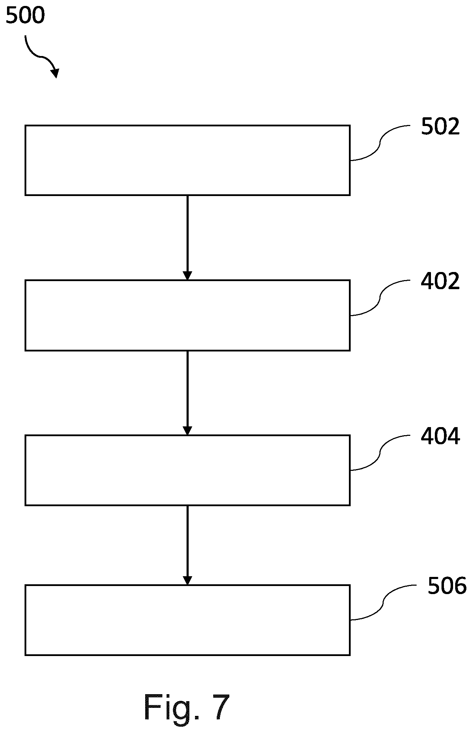

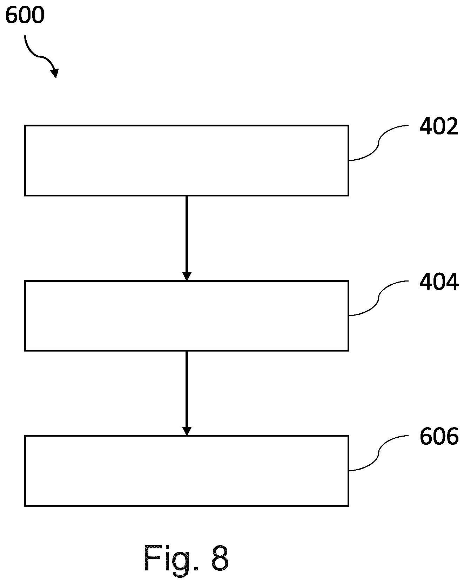

Das Verfahren des Werkzeugkopfes ist dabei in verschiedenen Weisen möglich, die im Folgenden anhand der in Fig. 7 und Fig. 8 gezeigten Ausführungsbeispiele des Schweißverfahrens im Detail beschrieben werden.

Fig. 7 zeigt ein Ausführungsbeispiel 500 des Schweißverfahrens aus Fig. 6, bei dem der Werkzeugkopf entlang einer festen Vorschubrichtung verschoben wird.

Das Schweißverfahren 500 umfasst dabei Schritte 402 und 404 des Schweißverfahrens 400. Schritt 406 wurde mit einem Schritt 506 ersetzt, in dem der Werkzeugkopf in einer Vorschubrichtung entlang einer Vorschubachse verfahren wird und, in Abhängigkeit von der ermittelten Ausprägung des Plasmas, in Korrekturrichtung entlang einer Korrekturachse senkrecht zur Vorschubachse. Hier ist also die Vorschubrichtung fest vorgegeben. Ein Abweichen erfolgt immer nur dann, wenn eine Veränderung der Ausprägung des Plasmas erkannt wird.

Zur Detektion der Veränderung der Ausprägung des Plasmas kann beispielsweise eine Ausprägung des Plasmas an einem Punkt in Vorschubrichtung vor dem Strahlungspfad des Schweißwerkzeuges genutzt werden. Um auch detektieren zu können, in welche Richtung entlang der Korrekturachse eine Korrektur erfolgen muss, ist eine Bestimmung der Ausprägung des Plasmas auf beiden Seiten des Strahlungspfads entlang der Korrekturachse vorteilhaft.

Das in Fig. 7 gezeigte Schweißverfahren 500 umfasst noch einen initialen Verfahrensschritt 502, der optional zu Beginn des Verfahrens ausgeführt werden kann. In diesem Schritt 502 wird eine Vorschubgeschwindigkeit in Abhängigkeit eines Leistungsparameters des Schweißwerkzeugs gewählt, so dass bei der gewählten Vorschubgeschwindigkeit keine Löcher im Werkstück entstehen.

Eine alternative Möglichkeit des Verfahrens des Werkzeugkopfes ist in Fig. 8 dargestellt.

Fig.8 zeigt ein Ausführungsbeispiel 600 des Schweißverfahrens aus Fig. 6, bei dem eine Verfahrrichtung des Werkzeugkopfs anhand einer an mehreren Punkten ermittelten Ausprägung des Plasmas erfolgt. Das Schweißverfahren 600 umfasst dabei die Schritte 402 und 404 aus dem Schweißverfahren 400. Der Schritt 406 aus dem Schweißverfahren 400 wurde in Schweißverfahren 600 ersetzt durch Schritt 606, in dem eine Verfahrrichtung des Werkzeugkopfes anhand der an mehreren Punkten ermittelten Ausprägung des Plasmas erfolgt. Hierzu wird vorteilhafterweise die Ausprägung des Plasmas an vier um einen Strahlungspfad des Schweißwerkzeugs gleichverteilt angeordneten Punkten ermittelt.

Bei allen Schweißverfahren ist es vorteilhaft, den Schweißkopf initial über dem verdeckten Stoß anzuordnen.

Zusammenfassend beschreibt diese Offenbarung eine Schweißeinrichtung (100) zum Fügen eines verdeckten Stoßes an einem Werkstück (101). Die Schweißeinrichtung umfasst hierfür eine Positionierungsfläche (106) zum Positionieren des Werkstücks (101). Weiterhin umfasst die Schweißeinrichtung ein Schweißwerkzeug (108), das ausgebildet ist, zum Fügen mittels eines Werkzeugkopfes (109) eine Oberfläche des Werkstücks (101), die den verdeckten Stoß umfasst, zu erhitzen, wobei der Werkzeugkopf (109) relativ zur Positionierungsfläche (106) verfahrbar angeordnet ist. Ferner umfasst die Schweißeinrichtung eine Sensoranordnung (112), die ausgebildet ist, eine Ausprägung eines durch das Schweißwerkzeug in einer Wechselwirkungszone (110) zwischen Werkzeugkopf (109) und Werkstück (101) erzeugbaren Plasmas durch Ermitteln einer elektrischen Eigenschaft des Plasmas zu bestimmen und ein Plasmainformationssignal (119) in Abhängigkeit von der ermittelten Ausprägung des Plasmas bereitzustellen. Zudem umfasst die Schweißeinrichtung eine Steuereinheit (120) zum Verfahren des Werkzeugkopfes (109), die das Plasmainformationssignal (119) empfängt und ausgebildet ist, den Werkzeugkopf (109) in Abhängigkeit des Plasmainformationssignals (119) entlang des verdeckten Stoßes zu verfahren.

## Patentansprüche

1. Anordnung umfassend eine Schweißeinrichtung (100) zum Fügen eines verdeckten Stoßes an einem Werkstück (101) und das auf einer Positionierungsfläche (106) angeordnete Werkstück (101) mit dem verdeckten Stoß,
wobei die Schweißeinrichtung (100) umfasst:
die Positionierungsfläche (106) zum Positionieren des Werkstücks (101);
ein Schweißwerkzeug (108), das ausgebildet ist, zum Fügen mittels eines Werkzeugkopfes (109) eine Oberfläche des Werkstücks (101), die den verdeckten Stoß umfasst, zu erhitzen, wobei der Werkzeugkopf (109) relativ zur Positionierungsfläche (106) verfahrbar angeordnet ist,
wobei das Schweißwerkzeug (108) ein Laserschweißwerkzeug und/oder ein Lichtbogenschweißwerkzeug umfasst,
**dadurch gekennzeichnet, dass** die Schweißeinrichtung (100) eine Sensoranordnung (112) umfasst, die ausgebildet ist, eine Ausprägung eines durch das Schweißwerkzeug in einer Wechselwirkungszone (110) zwischen Werkzeugkopf (109) und Werkstück (101) erzeugbaren Plasmas durch Ermitteln einer elektrischen Eigenschaft des Plasmas zu bestimmen und ein Plasmainformationssignal (119) in Abhängigkeit von der ermittelten Ausprägung des Plasmas bereitzustellen, und
eine Steuereinheit (120) zum Verfahren des Werkzeugkopfes (109), die das Plasmainformationssignal (119) empfängt und ausgebildet ist, den Werkzeugkopf (109) in Abhängigkeit des Plasmainformationssignals (119) entlang des verdeckten Stoßes zu verfahren.

2. Anordnung gemäß Anspruch 1, wobei die Sensoranordnung (112) einen Plasmawiderstandssensor (130) aufweist, der ausgebildet ist, mittels eines elektrischen Schaltkreises mit einer Plasmaelektrode (114) einen elektrischen Widerstand (132) des Plasmas zu ermitteln.

3. Anordnung gemäß Anspruch 1 oder 2, wobei die Sensoranordnung (112) einen Plasmaladungssensor aufweist, der ausgebildet ist mittels eines elektrischen Schaltkreises mit einer Plasmaelektrode (114) eine elektrische Ladung des Plasmas zu ermitteln.

4. Anordnung gemäß Anspruch 2 oder 3, wobei die Sensoranordnung (212) eine Mehrzahl von Plasmaelektroden (214A, 214B) umfasst und die Sensoranordnung (200) ausgebildet ist, mittels jeder der Plasmaelektroden eine Ausprägung des Plasmas zu bestimmen.

5. Anordnung gemäß einem der Ansprüche 2 bis 4, wobei der Werkzeugkopf (109) über der Positionierungsfläche (106) entlang von einer oder mehreren Achsen (D1, D2) verfahrbar ist und die eine oder mehreren Plasmaelektroden (114) entlang der einen oder der mehreren Achsen (D1, D2) angeordnet sind.

6. Anordnung gemäß einem der Ansprüche 2 bis 5, wobei
der Werkzeugkopf zum Zuführen eines Gases eine Schweißdüse umfasst, wobei
die eine oder mehreren Plasmaelektroden (114) entlang eines Strahlungspfads (122) auf einer Höhe mit der Schweißdrüse angeordnet sind oder entlang des Strahlungspfads (122) zwischen Schweißdüse und der Positionierungsfläche (106) angeordnet sind.

7. Anordnung gemäß einem der Ansprüche 2 bis 6, wobei die eine oder mehreren Plasmaelektroden (114) entlang eines Strahlungspfades (122) des Schweißwerkzeugs (108) angeordnet sind.

8. Schweißverfahren (400) zum Fügen eines verdeckten Stoßes an einem Werkstück, umfassend die folgenden Schritte:
Erhitzen einer Oberfläche des Werkstücks, die den verdeckten Stoß umfasst, zum Fügen mittels eines Schweißwerkzeugs mit einem Werkzeugkopf (402),
**dadurch gekennzeichnet, dass** das Verfahren weiter umfasst:
Bestimmen einer Ausprägung eines aufgrund einer Wechselwirkung zwischen Schweißwerkzeug und Werkstück erzeugten Plasmas durch Ermitteln einer elektrischen Eigenschaft des Plasmas (404), und
Verfahren des Werkzeugkopfes in Abhängigkeit von der bestimmten Ausprägung des Plasmas entlang des verdeckten Stoßes (406).

9. Schweißverfahren (400) gemäß Anspruch 8, wobei der Werkzeugkopf in Vorschubrichtung entlang einer Vorschubachse verfahren wird und, in Abhängigkeit von der ermittelten Ausprägung des Plasmas, in Korrekturrichtung entlang einer Korrekturachse senkrecht zur Vorschubachse.

10. Schweißverfahren (400) gemäß Anspruch 9, wobei das Verfahren des Werkzeugkopfes entlang der Korrekturrichtung erfolgt, wenn eine definierte Änderung der der Ausprägung des Plasmas ermittelt wird.

11. Schweißverfahren (400) nach einem der Ansprüche 9 oder 10, wobei die Ausprägung des Plasmas an zwei Punkten beidseitig um einen Strahlungspfad des Schweißwerkzeugs entlang der Korrekturachse ermittelt wird und das Verfahren des Werkzeugkopfes in Abhängigkeit der ermittelten Ausprägung des Plasmas erfolgt an diesen beiden Punkten (406).

12. Schweißverfahren (600) nach einem der Ansprüche 8 bis 11, wobei eine Verfahrrichtung des Werkzeugkopfes anhand der Ausprägung des Plasmas ermittelt wird (606).

13. Schweißverfahren (400) gemäß einem der Ansprüche 8 bis 12, wobei die Ausprägung des Plasmas an einem Punkt, der entlang einer Vorschubachse in Vorschubrichtung vor einem Strahlungspfad des Schweißwerkzeugs liegt, ermittelt wird.

14. Schweißverfahren (500) nach einem der Ansprüche 8 bis 13, wobei eine Verfahrgeschwindigkeit zum Verfahren des Werkzeugkopfes in Vorschubrichtung in Abhängigkeit eines Leistungsparameters des Schweißwerkzeugs gewählt wird, so dass bei der gewählten Verfahrgeschwindigkeit keine Löcher im Werkstück entstehen (502).

## Claims

1. An arrangement comprising a welding device (100) for joining a concealed jointat a workpiece (101), and the workpiece (101), which is positioned on a positioning surface (106) with the concealed joint,
whereby die welding device (100) comprises:
the positioning surface (106) for positioning the workpiece (101);
a welding tool (108) configured to heat, via a tool head (109), a surface of the workpiece (101) that includes the concealed joint, wherein the tool head (109) is arranged such as to be movable relative to the positioning surface (106),
wherein the welding tool (108) comprises a laser welding tool and/or an arc welding tool,
**characterised in that** the welding device (100) comprises a sensor arrangement (112) configured to determine an characteristic of a plasma generated by the welding tool in an interaction zone (110) between the tool head (109) and the workpiece (101) by determining an electrical property of the plasma, and to provide a plasma information signal (119) based on the plasma's determined characteristic, and
a control unit (120) for moving the tool head (109), which receives the plasma information signal (119) and is configured to move the tool head (109) along the concealed joint in response to the plasma information signal (119).

2. An arrangement according to claim 1, wherein the sensor arrangement (112) comprises a plasma resistance sensor (130) configured to determine an electrical resistance (132) of the plasma by means of an electrical circuit connected to a plasma electrode (114).

3. An arrangement according to claim 1 or 2, wherein the sensor arrangement (112) comprises a plasma charge sensor configured to determine an electrical charge of the plasma by means of an electrical circuit connected to a plasma electrode (114).

4. An arrangement according to claim 2 or 3, wherein the sensor arrangement (212) comprises a plurality of plasma electrodes (214A, 214B), and the sensor arrangement (200) is configured to determine a characteristic of the plasma using each of the plasma electrodes.

5. An assembly according to any one of claims 2 through 4, wherein the tool head (109) is movable above the positioning surface (106) along one or more axes (D1, D2), and the one or more plasma electrodes (114) are arranged along the one or more axes (D1, D2).

6. The arrangement according to any one of claims 2 to 5, wherein
the tool head for supplying a gas comprises a welding nozzle, wherein
one or more plasma electrodes (114) are arranged along a radiation path (122) at the same level as the welding nozzle, or are arranged along the radiation path (122) between the welding nozzle and the positioning surface (106).

7. An arrangement according to any one of claims 2 to 6, wherein the one or more plasma electrodes (114) are arranged along a radiation path (122) of the welding tool (108).

8. A welding method (400) for joining a concealed joint to a workpiece, comprising the following steps:
heating a surface of the workpiece, which comprises the concealed joint, for joining via a welding tool comprising a tool
**characterised in that** the method further comprises:
determining a characteristic of a plasma generated as a result of an interaction between a welding tool and a workpiece by measuring an electrical property of the plasma (404), and
movement of the tool head in accordance with the plasma's specific characteristic along the concealed joint (406).

9. The welding method (400) according to claim 2, wherein the tool head is moved in the feed direction along a feed axis and, depending on the determined characteristic of the plasma, in the correction direction along a correction axis perpendicular to the feed axis.

10. The welding method (400) according to claim 2, wherein the tool head is moved along the correction direction when a defined change in the plasma characteristic is detected.

11. The welding method (400) according to one of claims 9 or 10, wherein the intensity of the plasma is determined at two points on either side of a radiation path of the welding tool along the correction axis, and the movement of the tool head is controlled as a function of the plasma's determined characteristic at these two points (406).

12. The welding method (600) according to one of claims 8 to 11, whereina travel direction of the tool head is determined on the basis of the characteristic of the plasma (606).

13. The welding method (400) according to one of claims 8 to 12, wherein the plasma's characteristic is determined at a point which, along a feed axis, lies in the feed direction ahead of a radiation path of the welding tool.

14. The welding method (500) according to one of claims 8 to 13, wherein a travel speed for moving the tool head in the feed direction is selected as a function of a performance parameter of the welding tool, such that no holes are formed in the workpiece at the selected travel speed (502).

## Revendications

1. Agencement comprenant un dispositif de soudage (100) permettant d'assembler un joint caché au niveau d'une pièce (101), et la pièce (101) agencée sur une surface de positionnement (106) comprenant le joint caché,
dans lequel le dispositif de soudage (100) comprend :
la surface de positionnement (106) permettant de positionner la pièce (101) ;
un outil de soudage (108) conçu pour chauffer une surface de la pièce (101), laquelle surface comprend le joint caché, afin de l'assembler au moyen d'une tête d'outil (109), dans lequel la tête d'outil (109) est agencée de manière à pouvoir être déplacée par rapport à la surface de positionnement (106),
dans lequel l'outil de soudage (108) comprend un outil de soudage laser et/ou un outil de soudage à l'arc,
**caractérisé en ce que** le dispositif de soudage (100) comprend un agencement de capteur (112) conçu pour définir le profil d'un plasma pouvant être généré par l'outil de soudage dans une région d'interaction (110) entre la tête d'outil (109) et la pièce (101) grâce à la détermination d'une propriété électrique du plasma et pour fournir un signal d'information de plasma (119) en fonction du profil déterminé du plasma, et
une unité de commande (120) permettant de déplacer la tête d'outil (109), recevant le signal d'information de plasma (119) et conçue pour déplacer la tête d'outil (109) le long du joint caché en fonction du signal d'information de plasma (119).

2. Agencement selon la revendication 1, dans lequel l'agencement de capteur (112) présente un capteur de résistance de plasma (130) conçu pour déterminer une résistance électrique (132) du plasma au moyen d'un circuit électrique comprenant une électrode plasma (114).

3. Agencement selon la revendication 1 ou 2, dans lequel l'agencement de capteur (112) présente un capteur de charge de plasma conçu pour déterminer une charge électrique du plasma au moyen d'un circuit électrique comprenant une électrode plasma (114).

4. Agencement selon la revendication 2 ou 3, dans lequel l'agencement de capteur (212) comprend une pluralité d'électrodes plasma (214A, 214B) et l'agencement de capteur (200) est conçu pour définir un profil du plasma au moyen de chacune des électrodes plasma.

5. Agencement selon l'une quelconque des revendications 2 à 4, dans lequel la tête d'outil (109) peut être déplacée au-dessus de la surface de positionnement (106) le long d'un ou de plusieurs axe(s) (D1, D2) et la ou les électrode(s) plasma (114) est/sont agencée(s) le long du ou des axe(s) (D1, D2).

6. Agencement selon l'une quelconque des revendications 2 à 5, dans lequel
la tête d'outil comprend une buse de soudage en vue de la fourniture d'un gaz, dans lequel
la ou les électrode(s) plasma (114) est/sont agencée(s) le long d'un chemin de faisceau (122) au même niveau que la buse de soudage ou est/sont agencée(s) le long du chemin de faisceau (122) entre la buse de soudage et la surface de positionnement (106).

7. Agencement selon l'une quelconque des revendications 2 à 6, dans lequel la ou les électrode(s) plasma (114) est/sont agencée(s) le long d'un chemin de faisceau (122) de l'outil de soudage (108).

8. Procédé de soudage (400) permettant d'assembler un joint caché au niveau d'une pièce, comprenant l'étape ci-dessous consistant à :
chauffer une surface de la pièce comprenant le joint caché afin de l'assembler au moyen d'un outil de soudage comprenant un outil,
**caractérisé en ce que** le procédé comprend en outre : définir le profil d'un plasma généré par une interaction entre un outil de soudage et une pièce en déterminant une propriété électrique du plasma (404), et
déplacer la tête d'outil en fonction du profil défini du plasma le long du joint caché (406).

9. Procédé de soudage (400) selon la revendication 2, dans lequel la tête d'outil est déplacée dans le sens d'avancée le long d'un axe d'avancée et, en fonction du profil déterminé du plasma, dans un sens de correction le long d'un axe de correction perpendiculaire à l'axe d'avancée.

10. Procédé de soudage (400) selon la revendication 2, dans lequel le déplacement de la tête d'outil intervient le long de la direction de correction lorsqu'un changement défini du profil du plasma est détecté.

11. Procédé de soudage (400) selon l'une quelconque des revendications 9 ou 10, dans lequel le profil du plasma est déterminé en deux points de part et d'autre d'un chemin de faisceau de l'outil de soudage le long de l'axe de correction et le déplacement de la tête d'outil intervient en ces deux points (406) en fonction du profil déterminé du plasma.

12. Procédé de soudage (600) selon l'une quelconque des revendications 8 à 11, dans lequel une direction de déplacement de la tête d'outil est déterminée (606) à l'aide du profil du plasma.

13. Procédé de soudage (400) selon l'une quelconque des revendications 8 à 12, dans lequel le profil de plasma est déterminé en un point situé le long d'un axe d'avancée dans la direction d'avancée à l'avant d'un chemin de faisceau de l'outil de soudage.

14. Procédé de soudage (500) selon l'une quelconque des revendications 8 à 13, dans lequel une vitesse de déplacement permettant de déplacer la tête d'outil dans le sens d'avancée est choisie en fonction d'un paramètre de performance de l'outil de soudage de sorte qu'aucun trou n'apparaît (502) dans la pièce à la vitesse de déplacement sélectionnée.
